# EUROPÄISCHE PATENTANMELDUNG

(11) **EP 3 196 239 A1**
(43) Veröffentlichungstag der Anmeldung: **26.07.2017**
(21) Anmeldenummer: 16152584.5
(22) Anmeldetag: 25.01.2016
(51) Int. Cl.: C08K 3/34

(54) **VULKANISIERBARE ZUSAMMENSETZUNGEN AUF BASIS VON HYDRIERTEM NITRILKAUTSCHUK, VERFAHREN ZU DEREN HERSTELLUNG UND DEREN VERWENDUNG**

(71) Anmelder: ARLANXEO Deutschland GmbH, 41540 Dormagen (DE)
(72) Erfinder: Lieber, Susanna, 67663 Kaiserslautern (DE); Frenzel, Ulrich, 41545 Dormagen (DE); Schneiders, Karola, 51465 Bergisch Gladbach (DE)
(74) Vertreter: Wichmann, Birgid

(57) **Zusammenfassung**

Die vorliegende Erfindung betrifft vulkanisierbare Zusammensetzungen auf Basis von hydriertem Nitrilkautschuk, einem nichtverstärkenden mineralischen Füllstoff, ein basisches Silikat und ein Vernetzungssystem auf der Basis von Radikalspendern enthalten. Die Erfindung betrifft ferner die Herstellung solcher vulkanisierbarer Zusammensetzungen, ferner vulkanisierte Erzeugnisse, die daraus hergestellt werden und deren Verwendung insbesondere in Dichtungen, Riemen, Walzenbelägen, Schläuchen und Kabeln.

## Beschreibung

Die vorliegende Erfindung betrifft vulkanisierbare **Zusammensetzungen** enthaltend hydrierten Nitrilkautschuk, nichtverstärkenden mineralischen Füllstoff, basisches Silikat und ein Vernetzungssystem auf der Basis von Radikalspendern. Die Erfindung betrifft ferner die **Herstellung** solcher vulkanisierbarer Zusammensetzungen, ferner **Vulkanisate**, die daraus hergestellt werden und deren Verwendung insbesondere in **Dichtungen**, Riemen, Walzenbelägen, Schläuchen und Kabeln.

Es besteht eine Nachfrage nach hydrierten Nitrilkautschuken in Dichtungen, die eine hohe Hoch- und Tieftemperaturbeständigkeit aufweisen und gleichzeitig eine hohe Ölbeständigkeit zeigen. Besonderer Bedarf besteht nach alterungsbeständigen Nitrilkautschuken, insbesondere hydrierten Nitrilkautschuken, die einen Großteil der Anforderungen der Norm EN 549 erfüllen und somit neben einer niedrigen Quellung auch einen niedrigen **Hochtemperatur-Druckverformungsrest** und eine **hohe Hochtemperaturalterungsbeständigkeit bei 175 °C**, **insbesondere** Härte- und Reißfestigkeitsbeständigkeit aufweisen.

Die Eigenschaften eines Vulkanisats hängen von der Wechselwirkung der Bestandteile der vulkanisierbaren Zusammensetzung ab. Neben dem hydrierten Nitrilkautschuk als Grundbestandteil sind vor allem die weiteren Füllstoffe entscheidend. Mineralische und synthetische **Füllstoffe** mit **verstärkenden** und **nichtverstärkenden** Eigenschaften sind in großer Zahl bekannt.

Unter dem Begriff **"Verstärkung"** versteht der Fachmann die Summe aller Kautschuk-Füllstoff-Wechselwirkungen, die sich sowohl in unvernetztem als auch in vernetztem Zustand in physikalischen Eigenschaften ausdrücken.

**Verstärkende (aktive) Füllstoffe** verändern durch die Wechselwirkung mit der Kautschukmatrix die viskoelastischen Eigenschaften. Sie erhöhen die Viskosität der Kautschuke und verbessern das Bruchverhalten der Vulkanisate, wie Reißfestigkeit, Weiterreißwiderstand und Abrieb.

Verstärkende Füllstoffe sind beispielsweise spezielle **Ruße, gefällte Kieselsäuren** mit einer hohen spezifischen Oberfläche und **pyrogene Kieselsäuren** mit einer hohen spezifischen Oberfläche. Der am häufigsten eingesetzte Füllstoff ist jedoch Ruß.

**Nichtverstärkende (inaktive) Füllstoffe** verdünnen die Kautschukmatrix. Das bewirkt, dass bestimmte Eigenschaften, z. B. die Bruchenergie (d.h. das Integral der Spannungs-Dehnungskurve), abnehmen, andere Eigenschaften wie Verarbeitbarkeit oder Gasundurchlässigkeit können positiv beeinflusst werden (siehe F. Röthemeyer, F. Sommer "Kautschuktechnologie: Werkstoffe - Verarbeitung - Produkte" 2013, 3.Auflage, Seite 261-262). Aus der Literatur ist bekannt, dass nichtverstärkende Füllstoffe den Druckverformungsrest verbessern können.

**Nichtverstärkende mineralische Füllstoffe** sind dem Fachmann bekannt wie beispielsweise Kaolin, Talk, Neuburger Kieselerde, Tonerde, Kreide, Silikate, Kieselsäuren, Titanoxid, Aluminiumoxid und Aluminosilikate.

Füllstoffe weisen als 5 Gew.-%ige Lösung in Wasser einen charakteristischen pH-Wert auf. In Abhängigkeit von diesem pH-Wert können saure und **basische Füllstoffe** unterschieden werden.

EP-A-0 795 580 offenbart vulkanisierbare Zusammensetzungen enthaltend hydrierten Nitrilkautschuk, einen verstärkenden Füllstoff, einen nichtverstärkenden mineralischen Füllstoff, ein Metalloxid, wobei das Metall auf der 2.Gruppe des Periodensystems stammt, und ein Vulkanisationsmittel. In den Beispielen in Tabelle 1 werden Zusammensetzungen aus HNBR mit einer Kombination aus einem basischen Silikat, einem nicht verstärkenden Füllstoff und einer Peroxidverbindung nicht offenbart.

Die Verwendung von **basischen Silikaten** ist grundsätzlich bekannt. Basische Silikate haben in Wasser (5 Gew.-% in Wasser) gemessen nach DIN ISO 787/9 einen pH-Wert von mehr als 7. Beispiele für basische Silikate sind Natriumaluminiumsilikat (beispielsweise Zeolex® 23, HM500), Aluminiumsilikat (beispielsweise Pyrophillit), Calciumsilikat (beispielsweise Calsil® HM700), Calciummagnesiumsilikat und Magnesiumsilikat (beispielsweise Talk, feinverteilten Talk).

EP-A-0 778 327 offenbart die Verwendung von Butadien-Acrylnitril-Acrylat-Copolymeren, organischem Peroxid als Vernetzungsmittel, Metalloxiden als Vulkanisationshilfsmittel und basischen Silikaten als verstärkende Füllstoffe in vulkanisierbaren Zusammensetzungen. Das Dokument offenbart jedoch keine vulkanisierbare Zusammensetzung enthaltend hydrierten Nitrilkautschuk, basischen Füllstoff und nichtverstärkenden mineralischen Füllstoff. Comparative example 3 offenbart nur eine Zusammensetzung aus HNBR und FEF Ruß.

Den Dokumenten des Standes der Technik ist allen gemein, dass vulkanisierbare Zusammensetzungen von hydrierten Nitrilkautschuken mit einer Kombination aus **nichtverstärkendem mineralischen Füllstoff** und **basischem Silikat** nicht offenbart sind.

Die im Stand der Technik offenbarten Vulkanisate liefern jedoch nicht ausreichend befriedigende Werte hinsichtlich des Hochtemperatur-Druckverformungsrestes sowie der Alterungsbeständigkeit, insbesondere hinsichtlich der Härtebeständigkeit und Reißfestigkeitsbeständigkeit.

Die Aufgabe der vorliegenden Erfindung war es, vulkanisierbare Zusammensetzungen und deren Vulkanisate auf Basis hydrierter Nitrilkautschuke bereitzustellen, wobei die Vulkanisate
1. einen **Hochtemperatur-Druckverformungsrest (CS;** engl.: compression set) nach Lagerung bei 175 °C für 168 Stunden von weniger als **45 %**, bevorzugt weniger als 40 % aufweisen,
2. eine **Änderung der Härte (ΔH)** nach Lagerung bei 175 °C für 168 Stunden von **10 %** oder weniger, bevorzugt 8 % oder weniger aufweisen, und
3. ein **Änderung der Reißfestigkeit (ΔEB**; **engl.: elongation at break)** nach Lagerung bei 175 °C für 168 Stunden von weniger als **35** %, bevorzugt weniger als 30 % aufweisen.

Es wurde nun überraschenderweise gefunden, dass die Kombination von einem **nichtverstärkenden mineralischen Füllstoff**, beispielsweise **Polestar**^{®} **200R,** und einem **basischen Silikat,** beispielsweise **Vulkasil^{®} A1**, mit einem hydrierten Nitrilkautschuk nach peroxidischer Vernetzung zu Vulkanisaten führt, die die geforderten Eigenschaften erfüllen und somit sowohl einen **niedrigen Hochtemperatur-Druckverformungsrest** als auch **hervorragende Alterungsbeständigkeit** aufweisen.

**Gegenstand der Erfindung** sind daher vulkanisierbare Zusammensetzungen, enthaltend
(a) mindestens einen **hydrierten Nitrilkautschuk,**
(b) mindestens einen **nichtverstärkenden mineralischen Füllstoff,**
(c) mindestens ein **basisches Silikat** und
(d) mindestens eine **Peroxidverbindung.**

Dieses Eigenschaftsprofil ist bei Einsatz der bisher bekannten vulkanisierbaren Zusammensetzungen hydrierter Nitrilkautschuke, die allerdings keine Kombination der beiden Komponenten (b) und (c) enthalten, sondern nur jede der Komponenten (b) und (c) alleine, nicht möglich.

**Bevorzugte** vulkanisierbare Zusammensetzungen sind solche enthaltend
(a) 100 Gew.-Teile mindestens eines hydrierten Nitrilkautschuks,
(b) 50 bis 100 Gew.-Teile, bevorzugt 60 bis 90 Gew.-Teile mindestens eines nichtverstärkenden mineralischen Füllstoffs,
(c) 5 bis 50 Gew.-Teile, bevorzugt 10 bis 30 Gew.-Teile mindestens eines basischen Silikats mit einem pH Wert in Wasser (5 Gew.-% in Wasser) gemessen nach DIN ISO 787/9 größer 7 und
(d) 1 bis 20 Gew.-Teile, bevorzugt 2 bis 10 Gew.-Teile mindestens einer Peroxidverbindung.

**Besonders bevorzugt sind** vulkanisierbare Zusammensetzungen enthaltend
(a) 100 Gew.-Teile mindestens eines **hydrierten Nitrilkautschuks,**
(b) 50 bis 100 Gew.-Teile, bevorzugt 60 bis 90 Gew.-Teile **kalziniertes Kaolin** enthaltend 55 Gew.-% SiO₂ und 41 Gew.-% Al₂O₃ mit einem pH Wert in Wasser (5 Gew.-% in Wasser) gemessen nach DIN ISO 787/9 von 6,5±0,5 und einer Oberfläche (BET) gemessen nach ISO 9277 von 8,5 m²/g,
(c) 5 bis 50 Gew.-Teile, bevorzugt 10 bis 30 Gew.-Teile **Natriumaluminiumsilikat** mit einem pH-Wert in Wasser (5 Gew.-% in Wasser) gemessen nach DIN ISO 787/9 von 11,3±0,7, einem Gehalt an flüchtigen Bestandteilen gemessen nach DIN ISO 787/2 von 5,5±1,5 und einer Oberfläche (BET) gemessen nach ISO 9277 von 65±15,
(d) 1 bis 20 Gew.-Teile, bevorzugt 2 bis 10 Gew.-Teile mindestens einer **Peroxidverbindung,** bevorzugt Dicumylperoxid, tert-Butylcumylperoxid, Bis(tert-butylperoxyisopropyl)benzol, Di-tert-butylperoxid, 2,5-Dimethylhexan-2,5-dihydroperoxid, 2,5-Dimethylhexin-3,2,5-di-hydroperoxid oder Dibenzoylperoxid.

Die erfindungsgemäßen vulkanisierbaren Zusammensetzungen zeichnen sich dadurch aus, dass die daraus hergestellten Vulkanisate
- einen **Hochtemperatur-Druckverformungsrest** kleiner 45 % gemessen nach DIN ISO 850 Teil A nach Lagerung bei 175 °C für 168 Stunden,
- eine **Änderung der Härte** gemessen nach DIN 53508 nach Lagerung bei 175 °C für 168 Stunden von 10 % oder weniger aufweisen und
- eine **Änderung der Reißfestigkeit** von weniger als 35 % gemessen nach DIN 53508 nach Lagerung bei 175 °C für 168 Stunden aufweisen.

Die erfindungsgemäße vulkanisierbare Zusammensetzung enthält als **Komponente (a)** mindestens einen **hydrierten Nitrilkautschuk.**

### Hydrierte Nitrilkautschuke:

Unter hydrierten Nitrilkautschuken (HNBR) sind im Rahmen dieser Anmeldung Co- und/oder Terpolymere auf der Basis mindestens eines konjugierten Diens und mindestens eines α,β-ungesättigten Nitrilmonomeren sowie gegebenenfalls weiterer copolymerisierbarer Monomeren zu verstehen, bei denen die einpolymerisierten Dieneinheiten ganz oder teilweise hydriert sind.

Unter "Hydrierung" oder "hydriert" wird im Rahmen dieser Anmeldung eine Umsetzung der im Nitrilkautschuk ursprünglich vorhandenen Doppelbindungen zu mindestens 50 %, bevorzugt mindestens 85 %, besonders bevorzugt mindestens 95 % verstanden.

Als **α,β-ungesättigtes Nitril** kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Das **konjugierte Dien** kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Die Anteile an konjugiertem Dien und α,β-ungesättigtem Nitril in den hydrierten Nitrilkautschuken können in weiten Bereichen variiert werden. Der Anteil des oder der Summe der konjugierten Diene liegt üblicherweise im Bereich von 40 bis 90 Gew.-% und bevorzugt im Bereich von 50 bis 80 Gew.-%, bezogen auf das Gesamtpolymer. Der Anteil des oder der Summe der α,β-ungesättigten Nitrile liegt üblicherweise im Bereich von 10 bis 60 Gew.-% und bevorzugt im Bereich von 20 bis 50 Gew.-%, bezogen auf das Gesamtpolymer. Die zusätzlichen Monomere können in Mengen im Bereich von 0,1 bis 40 Gew.-%, bevorzugt im Bereich von 1 bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Die Herstellung solcher hydrierter Nitrilkautschuke, die für die erfindungsgemäßen vulkanisierbaren Zusammensetzungen geeignet sind, ist dem Fachmann hinlänglich geläufig.

Die zunächst erfolgende Herstellung der Nitrilkautschuke durch Polymerisation der vorgenannten Monomere ist in der Literatur (z.B. Houben-Weyl, Methoden der Organischen Chemie Bd.14/1, Georg Thieme Verlag Stuttgart 1961) umfangreich beschrieben.

Die anschließende Hydrierung der vorstehend beschriebenen Nitrilkautschuke zu hydriertem Nitrilkautschuk kann in der dem Fachmann bekannten Art und Weise erfolgen.

Es ist prinzipiell möglich, die Hydrierung von Nitrilkautschuken unter Einsatz homogener oder heterogener Hydrierkatalysatoren durchzuführen.

Wie in WO-A-01/77185 beschrieben ist es beispielsweise möglich, die Umsetzung mit Wasserstoff unter Einsatz homogener Katalysatoren, wie z.B. dem als "Wilkinson"-Katalysator ((PPh₃)₃RhCl) bekannten oder anderen durchzuführen. Verfahren zur Hydrierung von Nitrilkautschuk sind bekannt. Rhodium oder Titan werden üblicherweise als Katalysatoren verwendet, wobei aber auch Platin, Iridium, Palladium, Rhenium, Ruthenium, Osmium, Kobalt oder Kupfer entweder als Metall, oder aber bevorzugt in Form von Metallverbindungen eingesetzt werden können (siehe z.B. US-A-3,700,637, DE-A-25 39 132, EP-A-134 023, DE-OS-35 41 689, DE-OS-35 40 918, EP-A-298 386, DE-OS-35 29 252, DE-OS-34 33 392, US-A-4,464,515 und US-A-4,503,196).

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium-haltigen Katalysators erreicht werden. Einsetzbar ist beispielsweise ein Katalysator der allgemeinen Formel

(R¹ₘB)ₗ RhXₙ

worin
- R¹: gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen,
- B: Phosphor, Arsen, Schwefel oder eine Sulfoxid-Gruppe S=O bedeutet,
- X: Wasserstoff oder ein Anion, vorzugsweise Halogen und besonders bevorzugt Chlor oder Brom, bedeutet
- I: 2,3 oder 4 ist
- m: 2 oder 3 ist und
- n: 1,2 oder 3, bevorzugt 1 oder 3 ist.

Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis-(triphenylphosphin)-rhodium-hydrid der Formel ((C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01 bis 1 Gew.-%, bevorzugt im Bereich von 0,03 bis 0,5 Gew.-% und besonders bevorzugt im Bereich von 0,1 bis 0,3 Gew.-% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl-, Tricycloalkyl-, Triaryl-, Triaralkyl-, Diarylmonoalkyl-, Diarylmonocycloalkyl-, Dialkylmonoaryl-, Dialkyl-monocycloalkyl-, Dicycloalkylmonoaryl- oder Dicyclalkylmonoaryl-Resten.

Beispiele für Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3 bis 5 Gew.-%, besonders bevorzugt im Bereich von 0,5 bis 4 Gew.-%, bezogen auf das Gewicht des zu hydrierenden Nitrilkautschuks eingesetzt. Bevorzugt ist ferner das Gewichtsverhältnis des Rhodium-haltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneter Weise 0,1 bis 33 Gewichtsteile des Co-Katalysators, bevorzugt 0,5 bis 20 und ganz besonders bevorzugt 1 bis 5 Gewichtsteile, insbesondere mehr als 2 aber weniger als 5 Gewichtsteile Co-Katalysators bezogen auf 100 Gewichtsteile des zu hydrierenden Nitrilkautschuks eingesetzt.

Die praktische Durchführung solcher Hydrierungen ist dem Fachmann z.B. aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 °C bis 150 °C und einem Druck im Bereich von 50 bar bis 150 bar für 2 Stunden bis 10 Stunden mit Wasserstoff beaufschlagt.

Bei Einsatz heterogener Katalysatoren zur Herstellung hydrierter carboxylierter Nitrilkautschuke durch Hydrierung der entsprechenden carboxylierten Nitrilkautschuke handelt es sich üblicherweise um geträgerte Katalysatoren auf der Basis von Palladium.

Die **Mooney-Viskosität** (ML 1+4 gemessen bei 100 °C) des eingesetzten hydrierten Nitrilkautschuks (a) oder, sofern mehrere hydrierte Nitrilkautschuke (a) eingesetzt werden, der gesamten Mischung aller hydrierten Nitrilkautschuke (a) liegt in einem Bereich von 10 bis 120, bevorzugt in einem Bereich von 15 bis 100. Die Bestimmung der Mooney-Viskosität erfolgt dabei gemäß ASTM Norm D 1646.

Der erfindungsgemäße hydrierte Nitrilkautschuk weist einen **Gehalt an Restdoppelbindungen (RDB)** von 10 % oder weniger, bevorzugt von 7 % oder weniger, besonders bevorzugt von 1 % oder weniger auf.

Die in der erfindungsgemäßen vulkanisierbaren Zusammensetzung einsetzbaren hydrierten Nitrilkautschuke besitzen eine **Glastemperatur** kleiner -15 °C, bevorzugt kleiner -20 °C, besonders bevorzugt kleiner -25 °C.

Derartige hydrierte Nitrilkautschuke (a) sind teilweise kommerziell erhältlich, aber ferner in allen Fällen nach dem Fachmann über die Literatur zugängliche Herstellverfahren zugänglich. Beispiele für hydrierte Nitrilkautschuke sind voll- und teilhydrierte Nitrilkautschuke mit Acrylnitrilgehalten im Bereich 20 bis 50 Gew.-% (Therban^{®}-Palette der LANXESS Deutschland GmbH sowie Zetpol^{®}-Palette der Nippon Zeon Corporation). Beispiele für hydrierte Butadien/Acrylnitril/Acrylat-Polymere ist die Therban^{®} LT-Serie der LANXESS Deutschland GmbH, beispielsweise Therban^{®} LT 2157 sowie Therban^{®} LT 2007. Ein Beispiel für carboxylierte hydrierte Nitrilkautschuke ist die Therban^{®} XT-Serie der LANXESS Deutschland GmbH. Beispiele für hydrierte Nitrilkautschuke mit geringen Mooney-Viskositäten und daher verbesserter Verarbeitbarkeit ist ein Produkt aus der Therban^{®} AT-Serie, beispielweise Therban^{®} AT 3404.

Der **hydrierte Nitrilkautschuk** kann neben Wiederholungseinheiten mindestens eines ungesättigten Nitrils und mindestens eines konjugierten Diens ein oder mehrere weitere einpolymerisierbare Monomere in Form von **Carbonsäuren** oder **Carbonsäureester** enthalten. Es handelt sich dann dabei um **hydrierte carboxylierte Nitrilkautschuke** (auch als HXNBR abgekürzt).

Geeignete einpolymerisierbare Carbonsäuren sind Mono- oder Dicarbonsäuren mit 3 bis 18 C-Atomen, die in α,β-Position ungesättigt sind, und deren Ester. Bevorzugte α,β-ungesättigte Carbonsäuren sind Acrylsäure, Methacrylsäure, Itaconsäure, Fumarsäure, Maleinsäure, Crotonsäure und Mischungen davon.

Ester der α,β-ungesättigten Carbonsäuren mit 3 bis 18 C-Atomen umfassen vorzugsweise die Alkylester und die Alkoxyalkylester der zuvor genannten Carbonsäuren. Bevorzugte Ester der α,β-ungesättigten Carbonsäuren mit 3 bis 18 C-Atomen sind Methylacrylat, Ethylacrylat, Butylacrylat, 2-Ethylhexylacrylat und Octylacrylat, PEG-(Meth)acrylat mit 1 bis 8 Ethylenglycol-Wiederholungseinheiten. Bevorzugte Alkoxyalkylester sind Methoxyethylacrylat, und Ethoxyethylacrylat sowie Mischungen derselben.

Bevorzugte Ester sind α,β-ethylenisch ungesättigte Dicarbonsäure Monoestern wie beispielsweise
∘ Alkyl-, insbesondere C₄-C₁₈-Alkyl-, bevorzugt n-Butyl-, tert.-Butyl-, n-Pentyl- oder n-Hexyl-, besonders bevorzugt Mono-n-butylmaleat, Mono-n-butylfumarat, Mono-n-butylcitraconat, Mono-n-butylitaconat;
∘ Alkoxyalkyl-, insbesondere C₄-C₁₈-Alkoxyalkyl-, bevorzugt C₄-C₁₂-Alkoxyalkyl-,
∘ Hydroxyalkyl-, insbesondere C₄-C₁₈-Hydroxyalkyl-, bevorzugt C₄-C₁₂-Hydroxyalkyl-,
∘ Cycloalkyl-, insbesondere C₅-C₁₈-Cycloalkyl-, bevorzugt C₆-C₁₂-Cycloalkyl, besonders bevorzugt Monocyclopentylmaleat, Monocyclohexylmaleat, Monocycloheptylmaleat, Monocyclopentylfumarat, Monocyclohexylfumarat, Monocycloheptylfumarat, Monocyclopentylcitraconat, Monocyclohexylcitraconat, Monocycloheptylcitraconat, Monocyclopentylitaconat, Monocyclohexylitaconat und Monocycloheptylitaconat,
∘ Alkylcycloalkyl-, insbesondere C₆-C₁₂-Alkylcycloalkyl-, bevorzugt C₇-C₁₀-Alkylcycloalkyl, besonders bevorzugt Monomethylcyclopentylmaleat und Monoethylcyclohexylmaleat, Monomethylcyclopentylfumarat und Monoethylcyclohexylfumarat, Monomethylcyclopentylcitraconat und Monoethylcyclohexylcitraconat; Monomethylcyclopentylitaconat und Monoethylcyclohexylitaconat;
∘ Aryl-, insbesondere C₆-C₁₄-Aryl-Monoester, bevorzugt Maleinsäuremonoarylester, Fumarsäuremonoarylester, Citraconsäuremonoarylester oder Itaconsäuremonoarylester, besonders bevorzugt Monophenylmaleat oder Monobenzylmaleat, Monophenylfumarat oder Monobenzylfumarat, Monophenylcitraconat oder Monobenzylcitraconat, Monophenylitaconat oder Monobenzylitaconat oder Mischungen davon,
∘ ungesättigte Polycarboxylsäurepolyalkylester wie beispielsweise Dimethylmaleat, Dimethylfumarat, Dimethylitaconate oder Diethylitaconate; oder
∘ aminogruppenhaltige α,β-ethylenisch ungesättigte Carboxylsäureester wie beispielsweise Dimethylaminomethylacrylat oder Diethylaminoethylacrylat

Die Anteile an konjugiertem Dien und α,β-ungesättigtem Nitril in den HXNBR-Polymeren können in weiten Bereichen schwanken. Der Anteil des oder der Summe der konjugierten Diene liegt üblicherweise im Bereich von 40 bis 90 Gew.-% und bevorzugt im Bereich von 55 bis 75 Gew.-%, bezogen auf das Gesamtpolymer. Der Anteil des oder der Summe der α,β-ungesättigten Nitrile liegt üblicherweise bei 9,9 bis 60 Gew.-%, bevorzugt bei 15 bis 50 Gew.-%, bezogen auf das Gesamtpolymer. Die zusätzlichen Monomere liegen in Mengen von 0,1 bis 40 Gew.-%, bevorzugt 1 bis 30 Gew.-%, bezogen auf das Gesamtpolymer, vor. Die Anteile aller Monomere summieren sich jeweils zu 100 Gew.-% auf.

Es handelt sich somit bei den **hydrierten carboxylierten Nitrilkautschuken** um einen hydrierten carboxylierten Nitrilkautschuk HXNBR auf der Basis mindestens eines ungesättigten Nitrils, mindestens eines konjugierten Diens und mindestens eines Carboxyl- und/oder Carboxylat-Gruppen enthaltenden weiteren Termonomeren, wobei mindestens 50 % der ursprünglich im XNBR vorhandenen Doppelbindungen gesättigt sind.

Als **HXNBR** geeignet sind beispielsweise hydrierte carboxylierte Nitrilkautschuke auf der Basis eines XNBR aus Butadien und Acrylnitril und Acrylsäure und/oder Methacrylsäure und/oder Fumarsäure und/oder Maleinsäure und/oder den Methyl-, Ethyl-, Propyl-, Isopropyl-, n-Butyl, iso-Butyl-, n-Hexyl- und/oder 2-Ethylhexyl-Halbestern von Fumarsäure und/oder Maleinsäure und/oder den Methyl-, Ethyl-, Propyl-, Isopropyl-, n-Butyl-, iso-Butyl-, n-Hexyl- und/oder 2-Ethylhexyl-Estern von Acrylsäure und/oder Methacrylsäure.

**Hydrierte carboxylierte Nitrilkautschuke** sind auf verschiedenen Wegen zugänglich:

Möglich ist es beispielsweise, ein HNBR mit Carboxylgruppen-haltigen Verbindungen zu pfropfen.

Sie können ferner durch Hydrierung von **carboxylierten Nitrilkautschuke (XNBR)** erhalten werden. Derartige hydrierte carboxylierte Nitrilkautschuke sind beispielsweise in WO-A-01/77185 beschrieben.

Neben dem mindestens einen hydrierten Nitrilkautschuk (a), können daneben auch weitere Elastomere (e) enthalten sein. Weitere Elastomere (e) liegen in einem Gewichtsverhältnis von 1:5 bis 5:1 zu den hydrierten Nitrilkautschuken vor.

### Komponente (b) - nichtverstärkender mineralischer Füllstoff

Die erfindungsgemäße vulkanisierbare Zusammensetzung enthält als Komponente (b) mindestens einen **nichtverstärkenden mineralischen Füllstoff**.

Im Rahmen dieser Erfindung steht der Begriff "nichtverstärkend" für einen Füllstoff mit einer spezifischen Oberfläche (N₂-Oberfläche) kleiner 10 m²/g. Die hier in der Beschreibung angegebenen Werte für die spezifische Oberfläche der nichtverstärkenden mineralischen Füllstoffe sind BET-Werte, also Werte gemessen nach DIN-ISO 9277.

Bei der Komponente (b) handelt es sich um einen **nichtverstärkenden mineralischen Füllstoff** wie beispielsweise Talk, Neuburger Kieselerde, Kreide, Kaolin oder Tonerde.

Bevorzugt handelt es sich bei der Komponente (b) um **kalziniertes Kaolin**. enthaltend 40 bis 70 Gew.-% SiO₂ und 30 bis 60 Gew.-% Al₂O₃, mit einem pH Wert von 6,0 bis 7,0±0,5 und einer Oberfläche (BET) von 8 bis 9 m²/g.

Besonders bevorzugt handelt es sich bei der Komponente (b) um **kalziniertes Kaolin** enthaltend 50 bis 60 Gew.-% SiO₂, 35 bis 45 Gew.-% Al₂O₃ mit einem pH Wert von 6,4 bis 6,6±0,5 und einer Oberfläche (BET) von 8,3 bis 8,7 m²/g.

Ganz besonders bevorzugt handelt es sich bei der Komponente (b) um kalziniertes Kaolin enthaltend 55 Gew.-% SiO₂, 41 Gew.-% Al₂O₃ mit einem pH Wert von 6,5±0,5 und einer Oberfläche (BET) von 8,5 m²/g. Ein Beispiel für eine ganz besonders bevorzugte Komponente (b) ist das kalzinierte Kaolin **Polestar^{®} 200R** (kommerziell erhältlich bei der Firma Imerys). Polestar^{®} 200R wird hergestellt durch Erhitzen von zermahlenem Kaolin auf Temperaturen über 1000 °C.

Die Komponente (b) liegt in den erfindungsgemäßen vulkanisierbaren Zusammensetzungen bevorzugt in einer Menge von 50 bis 100 Gew.-Teilen, besonders bevorzugt in einer Menge von 60 bis 90 Gew.-Teile, bezogen auf 100 Gew.-Teile der hydrierten Nitrilkautschuke (a), vor.

### Komponente (c) - basisches Silikat

Die erfindungsgemäße vulkanisierbare Zusammensetzung enthält mindestens ein **basisches Silikat (c)**.

Im Rahmen dieser Erfindung steht der Begriff "basisches Silikat" sowohl für Silikate als auch Kieselsäuren, die gemessen in einer 5 Gew.-%igen wässrigen Lösung nach DIN ISO 787/9 einen pH-Wert von mehr als 7 aufweisen.

Bei der Komponente (c) handelt es sich um ein basisches Silikat mit einem pH-Wert von mehr als 7, bevorzugt mit einem pH-Wert von mehr als 8, besonders bevorzugt mit einem pH-Wert von mehr als 8 bis 12, und ganz besonders bevorzugt mit einem pH-Wert von 10,5 bis 12, gemessen in einer 5 Gew.-%igen wässrigen Lösung nach DIN ISO 787/9. Ein Beispiel für basische Silikate mit einem pH-Wert von mehr als 7 ist Natriumaluminiumsilikat, erhältlich unter dem Handelsnamen **Vulkasil^{®}** A1 von LANXESS.

Bevorzugt handelt es sich bei der Komponente (c) um ein basisches Silikat mit einem pH-Wert von mehr als 7 aus der Gruppe bestehend aus Aluminiumsilikat, Magnesiumsilikat, Calciumsilikat, Natriumaluminiumsilikat und Calciummagnesiumsilikat.

Besonders bevorzugt handelt es sich bei der Komponente (c) um ein **Natriumaluminiumsilikat.**

Ganz besonders bevorzugt handelt es sich bei der Komponente (c) um Natriumaluminiumsilikat mit einem pH-Wert in Wasser (5 Gew.-% in Wasser) gemessen nach DIN ISO 787/9 von 11,3±0,7, einem Gehalt an flüchtigen Bestandteilen gemessen nach DIN ISO 787/2 von 5,5±1,5 und einer Oberfläche (BET) gemessen nach ISO 9277 von 65±15. Ein Beispiel für eine ganz besonders bevorzugte Komponente (c) ist das Natriumaluminiumsilikat mit dem Markennamen **Vulkasil^{®} A1** (kommerziell erhältlich bei der Firma LANXESS).

Die Komponente (c) liegt in den erfindungsgemäßen vulkanisierbaren Zusammensetzungen bevorzugt in einer Menge von 5 bis 50 Gew.-Teilen, besonders bevorzugt in einer Menge von 10 bis 30 Gew.-Teilen, bezogen auf 100 Gew.-Teile der hydrierten Nitrilkautschuke (a), vor.

Das Gewichts**verhältnis der Komponente (b) zur Komponente (c)** beträgt von 20:1 bis 1:1, bevorzugt 10:1 bis 2:1 besonders bevorzugt 5:1 bis 3:1.

### Komponente (d) - Peroxidverbindung

Als **Komponente (d)** wird mindestens eine Peroxidverbindung als Vernetzungsmittel eingesetzt.

Als Peroxidverbindung (d) sind beispielsweise die folgenden **Peroxidverbindungen** geeignet:
Bis-(2,4-dichlorbenzoyl)-peroxid, Dibenzoylperoxid, Bis-(4-chlorbenzoyl)peroxid, 1,1-Bis-(tert-butylperoxy)-3,3,5-trimethylcyclohexan, tert-Butylperbenzoat, 2,2-Bis-(tert-butylperoxy)-buten, 4,4-Di-tert-butylperoxynonylvalerat, Dicumylperoxid, 2,5-Dimethyl-2,5-di-(tert-butylperoxy)-hexan, tert-Butylcumylperoxid, 1,3-Bis-(tert-butylperoxyisopropyl)-benzol, Di-tert-butylperoxid, 2,5-Dimethyl-2,5-di(tert-butylperoxy)-hexin, tert-Butylhydroperoxid, Wasserstoffperoxid, Methylethylketonperoxid, Lauroylperoxid, Decanoylperoxid, 3,5,5-Trimethyl-hexanoyl-peroxid, Di-(2-ethylhexyl)-peroxydicarbonat, Poly(tert-butyl peroxycarbonat), Ethyl-3,3-di-(tert-butylperoxy)-butyrat, Ethyl-3,3-di-(tert-amylperoxy)-butyrat, n-Butyl-4,4-di-(tert-butylperoxy)-valerat, 2,2-Di-(tert-butylperoxy)-butan, 1,1-Di-(tert-butylperoxy)-cyclohexan, 3,3,5-Trimethylcyclohexan, 1,1-Di-(tert-amylperoxy)cyclohexan, tert-Butyl-peroxybenzoat, tert-Butylperoxyacetat, tert-Butyl-peroxy-3,5,5-trimethylhexanoat, tert-Butyl peroxyisobutyrat, tert-Butyl-peroxy-2-ethylhexanoat, tert-Butyl-peroxypivalat, tert-Amyl-peroxypivalat, tert-Butylperoxyneodecanoat, Cumyl-peroxyneodecanoat, 3-Hydroxy-1,1-di-methylbutyl-peroxyneodecanoat, tert-Butyl-peroxybenzoat, tert-Butyl-peroxyacetat, tert-Amyl-peroxy-3,5,5-trimethylhexanoat, tert-Butyl-peroxyisobutyrat, tert-Butyl-peroxy-2-ethylhexanoat, Cumyl-peroxyneodecanoat, 3-Hydroxy-1,1-di-methylbutyl-peroxy-neodecanoat, 2,5-Dimethyl-2,5-di-(tert-butyl-peroxy)-hexyn-(3-di-tert-amyl)-peroxid, 2,5-Dimethyl-2,5-di-(tert-butylperoxy)-hexan, tert-Amyl-hydroperoxid, Cumolhydroperoxid, 2,5-Dimethyl-2,5-di-(hydroperoxy)-hexan, Diisopropylbenzol-monohydroperoxid sowie Kaliumperoxodisulfat.

Die mindestens eine Peroxidverbindung der erfindungsgemäßen vulkanisierbaren Zusammensetzung ist vorzugsweise ein organisches Peroxid, insbesondere Dicumylperoxid, tert-Butylcumylperoxid, Bis-(tert-butyl-peroxy-isopropyl)benzol, Di-tert-butylperoxid, 2,5-Dimethylhexan-2,5-dihydroperoxid, 2,5-Dimethylhexin-3,2,5-di-hydroperoxid, Dibenzoylperoxid, Bis-(2,4-dichlorobenzoyl)peroxid, tert-Butylperbenzoat, 4,4-Di(tert-butylperoxy)valeriansäurebutylester und/oder 1,1-Bis(tert-butylperoxy)-3,3,5-trimethylcyclohexan bedeutet.

Die Komponente (d) liegt in den erfindungsgemäßen vulkanisierbaren Zusammensetzungen bevorzugt in einer Menge von 1 bis 20 Gew.-Teilen, besonders bevorzugt in einer Menge von 2 bis 10 Gew.-Teilen, bezogen auf 100 Gew.-Teile der hydrierten Nitrilkautschuke (a), vor.

Darüber hinaus kann die vulkanisierbare Zusammensetzung weitere Kautschukadditive enthalten. Übliche Kautschukadditive schließen beispielsweise ein: Polymere, die nicht unter die erfindungsgemäße Definition der Komponente (a) fallen, Füllstoffaktivatoren, Öle, insbesondere Verarbeitungsöle oder Extenderöle, Weichmacher, Verarbeitungshilfsmittel, Beschleuniger, multifunktionelle Vernetzer, Alterungsschutzmittel, Ozonschutzmittel, Antioxidationsmittel, Formtrennmittel, Anvulkanisationshemmer, weitere Stabilisatoren und Antioxidantien, Farbstoffe, Fasern umfassend organische und anorganische Fasern sowie Faserpulpe, Vulkanisationsaktivatoren, und zusätzliche polymerisierbare Monomere, Dimere, Trimere oder Oligomere.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyltrimethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin oder Ethylenglycole mit Molekulargewichten von 74 bis 10.000 g/mol dar. Die Menge an Füllstoffaktivatoren beträgt üblicherweise 0,5 bis 10 Gew.-Teile, bezogen auf 100 Gew.-Teile der hydrierten Nitrilkautschuke (a).

Als **Alterungsschutzmittel** kommen insbesondere solche in Frage, die bei der peroxidischen Vulkanisation möglichst wenig Radikale abfangen. Dies sind insbesondere oligomerisiertes 2,2,4-Trimethyl-1,2-dihydro-chinolin (TMQ), styrolisiertes Diphenylamin (DDA), octyliertes Diphenylamin (OCD) oder Zinksalz von 4- und 5-Methylmercaptobenzimidazol (ZMB2). Daneben können auch die bekannten phenolischen Alterungsschutzmittel eingesetzt werden, wie sterisch gehinderte Phenole bzw. Alterungsschutzmittel auf Basis von Phenylendiamin. Es können auch Kombinationen der genannten Alterungsschutzmittel eingesetzt werden.

Die **Alterungsschutzmittel** werden üblicherweise in Mengen von 0,1 bis 5 Gew.-Teile, bevorzugt von 0,3 bis 3 Gew.-Teile, bezogen auf 100 Gew.-Teile der hydrierten Nitrilkautschuke (a).

Als **Formtrennmittel** kommen beispielsweise in Betracht: Gesättigte oder teilweise ungesättigte Fett- und Ölsäuren oder deren Derivate (in Form von Fettsäureestern, Fettsäuresalzen, Fettalkoholen oder Fettsäureamiden), weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von 0,2 bis 10 Gew.-Teile, bevorzugt 0,5 bis 5 Gew.-Teile, bezogen auf 100 Gew.-Teile der hydrierten Nitrilkautschuke (a).

Die Verwendung eines **Antioxidans** in den erfindungsgemäßen Zusammensetzungen kann gewünscht sein. Beispiele üblicher Antioxidantien schließen p-Dicumyldiphenylamin (Naugard^{®} 445), Vulkanox^{®} DDA (styrolisiertes Diphenylamin), Vulkanox^{®} ZMB2 (Zink-Salz von Methylmercapto-benzimidazol), Vulkanox^{®}HS (polymerisiertes 1,2-dihydro-2,2,4-trimethylchinolin) und Irganox^{®} 1035 (Thiodiethylen-bis(3,5-di-tert-butyl-4-hydroxy)hydrocinnamat oder Thiodiethylen-bis(3-(3,5-di-tert-butyl-4-hydroxyphenyl) propionat).

Auch die Verstärkung der Vulkanisate mit Festigkeitsträgern aus Glas nach der Lehre von US-A-4,826,721 ist möglich sowie die Verstärkung mit aromatischen Polyamiden (Aramid^{®}).

In einer bevorzugten Ausführungsform enthält die erfindungsgemäße vulkanisierbare Zusammensetzung
a) 100 Gew.-Teile mindestens eines **hydrierten Nitrilkautschuks**,
b) 50 bis 100 Gew.-Teile, bevorzugt 60 bis 90 Gew.-Teile mindestens eines **nichtverstärkenden mineralischen Füllstoffs**,
c) 5 bis 50 Gew.-Teile, bevorzugt 10 bis 30 Gew.-Teile mindestens eines **basischen Silikats**,
d) 1 bis 20 Gew.-Teile, bevorzugt 2 bis 10 Gew.-Teile mindestens einer **Peroxidverbindung**, bevorzugt Dicumylperoxid, tert-Butylcumylperoxid, Bis-(tert-butyl-peroxy-isopropyl)benzol, Di-tert-butylperoxid, 2,5-Dimethylhexan-2,5-dihydroperoxid, 2,5-Dimethylhexin-3,2,5-di-hydroperoxid oder Dibenzoylperoxid,
e) 0 bis 200 Gew.-Teile, bevorzugt 0 bis 100 Gew.-Teile mindestens eines üblichen **Kautschukadditivs**.

In einer besonders bevorzugten Ausführungsform enthält die erfindungsgemäße vulkanisierbare Zusammensetzung
(a) 100 Gew.-Teile mindestens eines **hydrierten Nitrilkautschuks**,
(b) 60 bis 90 Gew.-Teile mindestens eines **kalzinierten Kaolins** enthaltend 55 Gew.-% SiO₂ und 41 Gew.-% Al₂O₃ mit einem pH Wert in Wasser (5 Gew.-% in Wasser) gemessen nach DIN ISO 787/9 von 6,5±0,5 und einer Oberfläche (BET) gemessen nach ISO 9277 von 8,5 m²/g,
(c) 10 bis 30 Gew.-Teile mindestens eines **Natriumaluminiumsilikats** mit einem pH-Wert in Wasser (5 Gew.-% in Wasser) gemessen nach DIN ISO 787/9 von 11,3±0,7, einem Gehalt an flüchtigen Bestandteilen gemessen nach DIN ISO 787/2 von 5,5±1,5 und einer Oberfläche (BET) gemessen nach ISO 9277 von 65±15,
(d) 2 bis 10 Gew.-Teile mindestens einer **Peroxidverbindung**, bevorzugt Dicumylperoxid, tert-Butylcumylperoxid, Bis-(tert-butyl-peroxy-isopropyl)benzol, Di-tert-butylperoxid, 2,5-Dimethylhexan-2,5-dihydroperoxid, 2,5-Dimethylhexin-3,2,5-di-hydroperoxid oder Dibenzoylperoxid,
(e) 0 bis 100 Gew.-Teile mindestens eines üblichen **Kautschukadditivs**.

**Gegenstand der Erfindung** ist ferner ein **Verfahren zur Herstellung** der vorgenannten erfindungsgemäßen vulkanisierbaren Zusammensetzungen, indem man alle Komponenten (a), (b), (c) und (d) mischt. Dies kann unter Einsatz von dem Fachmann bekannten Vorrichtungen und Mischapparaturen erfolgen.

Die Reihenfolge, in der die Komponenten miteinander gemischt werden, ist nicht von grundlegender Bedeutung, sondern wird jeweils abgestimmt auf die zur Verfügung stehenden Mischaggregate.

Die Mischung der Komponenten (a), (b), (c) und (d) kann dabei, je nach Temperatur, unter Verwendung der typischen, in der Kautschukindustrie gängigen Mischsystemen erfolgen. Einsatzbar sind i) diskontinuierlich mischende Aggregate in Form von Mischwalzen oder Innenmischern sowie ii) kontinuierlich mischende Aggregate wie Mischextruder.

Besonders bewährt hat es sich, die Mischung der Komponenten (a), (b), (c) und (d) bei einer vorgegebenen Mischertemperatur im Bereich von ca. 30 °C bis 40 °C durchzuführen, da hier mit den oben genannten, in der kautschukverarbeitenden Industrie gängigen Mischaggregaten genügend hohe Scherkräfte appliziert können, um eine gute Durchmischung zu erreichen.

Alternativ kann auch in geeigneten Aggregaten bei höheren Temperaturen gemischt werden. Im Einzelfall kann es notwendig sein, zunächst die Komponenten (a), (b) und (c) zu mischen und die Peroxidverbindung (d) erst ganz zum Schluss zuzumischen. Dies kann zum Beispiel im Mischaggregat im Endstück einer Düse unmittelbar vor dem Austreten der Mischung auf das Substrat / in die Form geschehen.

In der Praxis erhält man nach dem Mischen der erfindungsgemäßen Komponenten die vulkanisierbare Zusammensetzungen z.B. in Form sogenannter "Felle", Fütterstreifen oder Fütterkörper, oder auch als Pellets oder Granulate. Dies können anschließend in Formen gepresst oder spritzgegossen werden und werden entsprechend den eingesetzten Peroxidverbindungen bei geeigneten Bedingungen vernetzt.

**Gegenstand der Erfindung** ist ferner ein **Verfahren zur Herstellung von Vulkanisaten**, indem man die erfindungsgemäße vulkanisierbaren Zusammensetzung der zuvor genannten Art einer Vulkanisation, d.h. einem Energieeintrag, insbesondere einer Temperaturbehandlung, unterwirft.

Der Energieeintrag kann in Form von thermischer Energie oder Strahlungsenergie erfolgen, je nachdem welcher Typ der Peroxidverbindung (d) in der vulkanisierbaren Zusammensetzung gewählt wird.

Die Herstellung der vulkanisierten Erzeugnissen mittels Temperaturbehandlung wird durchgeführt, indem man die erfindungsgemäßen vulkanisierbaren Zusammensetzungen in üblicher Weise in geeigneten Formwerkzeugen einer Temperatur im Bereich von bevorzugt 120 °C bis 200 °C, besonders bevorzugt von 140 °C bis 180 °C aussetzt.

Im Rahmen der Vernetzung der erfindungsgemäßen vulkanisierbare Zusammensetzung führt die Peroxidverbindung (d) zu einer radikalischen Vernetzung zwischen und mit dem eingesetzten hydrierten Nitrilkautschuk (a).

**Gegenstand der Erfindung** sind ferner auch **Vulkanisate**, die durch Vernetzung, d.h. Vulkanisation, der erfindungsgemäßen vulkanisierbaren Zusammensetzungen erhältlich sind.

**Gegenstand der Erfindung** ist ferner die Verwendung der **Vulkanisate** als Dichtungen, Riemen, Walzenbeläge, Schläuche und Kabel.

### Beispiele:

### Herstellung, Vulkanisation und Charakterisierung der Kautschukzusammensetzungen

Als primäres Mischaggregat wurde eine Mischwalze mit auf 30 °C gekühlten Walzwerk der Firma Troester vom Typ WNU3 mit Walzen eingesetzt, die einen Durchmesser von 200 mm besitzen. Hierbei wurde der hydrierte Nitrilkautschuk (a) vorgelegt und alle weiteren Komponenten in der Reihenfolge (b), dann (c), dann (d) (siehe unten aufgeführte Liste der Komponenten) hinzugefügt. Die Drehzahl und Friktion der Walze wurde dabei so gesteuert, dass stabile Felle erhalten werden. Nach ca. 5 min Mischzeit war die Mischung beendet und das Produkt wurde als Fell von der Walze abgezogen. Nachfolgend wurde in Plattenpressen eine Vulkanisation dieser Felle bei 180 °C für 15 min vorgenommen.

### Eingesetzte Komponenten:

- **Therban^{®} LT2007**: Acrylathaltiger hydrierter Nitrilkautschuk, ACN-Gehalt: 21±1,5 Gew.-%, Mooney Viskosität ML 1+4 @100 °C: 74±10 ME, Restdoppelbindungsgehalt: ≤0,9 %. Dieser hydrierte Nitrilkautschuk ist kommerziell erhältlich von der LANXESS Deutschland GmbH.
- **Therban^{®} 3607**: Hydrierter Nitrilkautschuk, ACN-Gehalt: 36±1,5 Gew.-%, Mooney Viskosität ML 1+4 @100 °C: 66±7 ME, Restdoppelbindungsgehalt: ≤0,9 %. Dieser hydrierte Nitrilkautschuk ist kommerziell erhältlich von der LANXESS Deutschland GmbH.
- **Polestar^{®} 200R**: Kalziniertes Kaolin der Firma Imerys, enthaltend 55 Gew.-% SiO₂, 41 Gew.-% Al₂O₃ mit einem pH Wert von 6,5±0,5 und einer Oberfläche (BET) von 8,5 m²/g.
- **Vulkasil^{®}A1**: Natriumaluminiumsilicat der Firma LANXESS mit einem pH-Wert in Wasser (5 Gew.-% in Wasser) gemessen nach DIN ISO 787/9 von 11,3±0,7, einem Gehalt an flüchtigen Bestandteilen gemessen nach DIN ISO 787/2 von 5,5±1,5 und einer Oberfläche (BET) gemessen nach ISO 9277 von 65±15.
- **Perkadox**^{®} **14-40**: Di(tert.-butylperoxyisopropyl)benzol 40% geträgert auf Kieselsäure, kommerziell verfügbar von Akzo Nobel Polymer Chemicals BV
- **N990**: Ruß der Firma Orion Engineered Carbon
- **Uniplex**^{®} **546**: Trioctyltrimellitat (TOTM), kommerziell verfügbar von LANXESS Deutschland GmbH
- **Maglite**^{®}: Magnesiumoxid, kommerziell verfügbar von CP Hall.
- **Luvomaxx**^{®} **CDPA**: 70%iger Masterbatch basierend auf alkyliertem Diphenylamin, erhältlich von Lehmann und Voss
- **Vulkanox**^{®} **ZMB2/C5**: Zinksalz von 4- und 5-Methyl-2-mercaptobenzthiazol, kommerziell verfügbar von LANXESS Deutschland GmbH
- **Silquest**^{®} **RC1**: Organosilan, kommerziell verfügbar von Momentive Performance Materials
- **TAIC**: Triallylisocyanurat, 70% Masterbatch, kommerziell verfügbar von Kettlitz Chemie GmbH & Co KG.
- **Zinkoxid activ**: Zinkoxid, kommerziell verfügbar von LANXESS Deutschland GmbH
- **TRIM**: Trimethylolpropantrimethacrylat, 70% Masterbatch kommerziell verfügbar von Kettlitz Chemie GmbH & Co KG

Alle Mengenangaben in den Tabellen "phr" bedeuten parts per hundred parts of rubber. Die Summe aller Elastomerkomponenten, umfassend mindestens einen hydrierten Nitrilkautschuk, entspricht 100 phr.

Die **Vernetzungsdichte** wurde mit einem Moving Die Rheometer (MDR 2000E) bestimmt, wobei mit einem Winkel von 0,5° und einer Oszillationsfrequenz von 1,7 Hz bei 180 °C für 30 Minuten gemessen wurde.

Für die **Zugprüfung** wurden 2 mm Platten durch Vulkanisation der vulkanisierbaren Mischung bei 180 °C hergestellt. Aus diesen Platten wurden die hantelförmigen Prüfkörper ausgestanzt und nach ASTM D2240-81 die Zugfestigkeit und Dehnung bestimmt.

Die **Härte** wurde mit einem Durometer nach ASTM D2240-81 bestimmt.

Die Bestimmung des **Druckverformungsrestes** erfolgte nach DIN ISO 850 Teil A.

Die Bestimmung des **Alterungsverhaltens** der Vulkanisate erfolgte nach DIN 53508.

**Beispiele 1-4:** Alle erfindungsgemäßen Beispiele sind in den folgenden Tabellen 1 bis 4 mit einem * hinter der jeweiligen Beispielsnummer gekennzeichnet.

**Tabelle 1: Vulkanisierbare Zusammensetzungen**

| | **1** | **2*** | **3** | **4*** |
|---|---|---|---|---|
| **(a) Therban**^{®} **LT2007** | 100 | 100 | | |
| **(a) Therban**^{®} **3607** | | | 100 | 100 |
| **(b) Polestar**^{®} **200R** | | 80 | | 80 |
| **(c) Vulkasil**^{®} **A1** | | 20 | | 20 |
| **(d) Perkadox**^{®} **14-40** | 10 | 10 | 10 | 8 |
| **N990** | 100 | | 100 | |
| **TOTM** | 10 | 10 | | 10 |
| **MgO** | 2 | 2 | | 2 |
| **CDPA** | 1,4 | 1,4 | 1,4 | 1,4 |
| **Vulkanox**^{®} **ZMB2** | 0,4 | 0,4 | 0,4 | 0,4 |
| **Silquest**^{®} **RC1** | | 2 | | 2 |
| **TAlC 70%** | 3 | 3 | | |
| **ZnO** | | | 3 | 5 |
| **TRIM** | | | 3 | 4 |

Die erfindungsgemäßen Zusammensetzungen 2* und 4* enthalten neben einem hydrierten Nitrilkautschuk (Komponente (a)) und einer Peroxidverbindung (Komponente (d)) sowohl einen nichtverstärkenden mineralischen Füllstoff (Komponente (b)) als auch ein basisches Silikat (Komponente (c)).

**Tabelle 2: Vulkanisationsmessung**

| | | **1** | **2*** | **3** | **4*** |
|---|---|---|---|---|---|
| **Delta S'** | **dNm** | 21,71 | 22,18 | 37,7 | 25,16 |
| **M 10** | **MPa** | 0,6 | 0,7 | 1 | 0,9 |
| **M 25** | **MPa** | 1,2 | 1,6 | 2 | 1,8 |
| **M 50** | **MPa** | 2,6 | 4,2 | 4,2 | 4 |
| **M 100** | **MPa** | 7,3 | 11,5 | 10,1 | 10,1 |
| **EB** | **%** | 181 | 135 | 210 | 166 |
| **TS** | **MPa** | 13 | 15 | 16 | 16,8 |
| **H** | **ShA** | 67 | 70 | 77 | 74,1 |

Die erfindungsgemäße Zusammensetzung 2*, enthaltend einen vollhydrierten acrylathaltigen Nitrilkautschuk, weist eine geringere Reißdehnung auf, als Zusammensetzungen, die nur Ruß als verstärkenden Füllstoff enthalten (siehe Vergleichsbeispiel 5).

Die erfindungsgemäße Zusammensetzung 4*, enthaltend einen vollhydrierten Nitrilkautschuk, weist eine geringere Reißdehnung auf, als Zusammensetzungen, die nur Ruß als verstärkenden Füllstoff enthalten (siehe Vergleichsbeispiel 6).

**Tabelle 3: Eigenschaften der vulkanisierten Kautschukzusammensetzungen**

| **Hochtemperatur-Druckverformungsrest** | | **1** | **2*** | **3** | **4*** |
|---|---|---|---|---|---|
| **175 °C/168 h** | **%** | 41 | 39 | 55 | 41 |

Die erfindungsgemäßen Kautschukzusammensetzungen 2* und 4* weisen einen geringeren Hochtemperatur-Druckverformungsrest bei 175 °C/168 Stunden auf im Vergleich zu den Vergleichsvulkanisaten 1 und 3 ohne die Komponenten (b) und (c). Die erfindungsgemäßen Kautschukzusammensetzungen 2* und 4* weisen beide einen Hochtemperatur-Druckverformungsrest von weniger als 45 % auf.

Zur Charakterisierung des **Alterungsverhaltens** wurden anschließend sämtliche Vulkanisate nach DIN 53508 7 Tage (168 Stunden) bei 175 °C gealtert.

Danach wurden bei einer Messtemperatur von 23 °C die in **Tabelle 4** angegebenen Werte ermittelt.

**Tabelle 4: Eigenschaften der vulkanisierten Kautschukzusammensetzungen nach Alterung bei 175 °C /168 Stunden**

| **Heißluftalterung** | | **1** | **2*** | **3** | **4*** |
|---|---|---|---|---|---|
| **175°C/168 h** | | | | | |
| **M 10** | **MPa** | 1 | 1 | 3 | 2 |
| **M 25** | **MPa** | 3 | 3 | 6 | 4 |
| **M 50** | **MPa** | 6 | 7 | 11 | 8 |
| **M 100** | **MPa** | 12 | 14 | 18 | 14 |
| **EB** | **%** | 109 | 107 | 103 | 135 |
| **TS** | **MPa** | 12 | 14 | 18 | 16 |
| **H** | **ShA** | 77 | 78 | 88 | 82 |
| **ΔEB** | **%** | -40 | -21 | -51 | -19 |
| **ΔTS** | **%** | -5 | -7 | 16 | -5 |
| **ΔH** | **ShA** | 10 | 8 | 11 | 8 |

Die Versuchsserie zeigt, dass die erfindungsgemäß hergestellten Vulkanisate, d.h. die vulkanisierten Kautschukzusammensetzungen 2* und 4* den Vergleichsvulkanisaten 1 und 3 im Hinblick auf den **Hochtemperatur-Druckverformungsrest** und bezüglich der **Alterungseigenschaften** nach Langzeit-Heißluft-Alterung (insbesondere hinsichtlich der Reißfestigkeit ΔEB und der Härte ΔH) deutlich überlegen sind.

## Patentansprüche

1. **Vulkanisierbare Zusammensetzungen**, enthaltend
(a) mindestens einen hydrierten Nitrilkautschuk,
(b) mindestens einen nichtverstärkenden mineralischen Füllstoff,
(c) mindestens ein basisches Silikat und
(d) mindestens eine Peroxidverbindung.

2. Vulkanisierbare Zusammensetzung nach Anspruch 2, wobei die Komponente a) einen Gehalt an Restdoppelbindungen (RDB) von 10 % oder weniger, bevorzugt von 7 % oder weniger, besonders bevorzugt von 1 % oder weniger aufweist.

3. Vulkanisierbare Zusammensetzung nach Anspruch 1 oder 2, wobei die Komponente a) neben Wiederholungseinheiten mindestens eines ungesättigten Nitrils und mindestens eines konjugierten Diens ein oder mehrere weitere einpolymerisierbare Monomere in Form von Carbonsäuren oder Carbonsäureester enthalten, bevorzugt Acrylsäure, Methacrylsäure, Itaconsäure, Fumarsäure, Maleinsäure, Crotonsäure, Methylacrylat, Ethylacrylat, Butylacrylat, 2-Ethylhexylacrylat, Octylacrylat, PEG-(Meth)acrylat mit 1 bis 8 Ethylenglycol-Wiederholungseinheiten, Methoxyethylacrylat oder Ethoxyethylacrylat sowie deren Mischungen.

4. Vulkanisierbare Zusammensetzung nach einem der Ansprüche 1 bis 3, wobei die Komponente (b) in einer Menge von 50 bis 100 Gew.-Teilen, bevorzugt 60 bis 90 Gew.-Teilen, bezogen auf 100 Gew.-Teile des hydrierten Nitrilkautschuks (a), eingesetzt wird.

5. Vulkanisierbare Zusammensetzung nach einem der Ansprüche 1 bis 4, wobei als Komponente (b) kalziniertes Kaolin eingesetzt wird.

6. Vulkanisierbare Zusammensetzung nach einem der Ansprüche 1 bis 5, wobei die Komponente (c) in einer Menge von 5 bis 50 Gew.-Teilen, bevorzugt 10 bis 30 Gew.-Teile, bezogen auf 100 Gew.-Teile des hydrierten Nitrilkautschuks (a), eingesetzt wird.

7. Vulkanisierbare Zusammensetzung nach einem der Ansprüche 1 bis 6, wobei als Komponente (c) Aluminiumsilikate, Magnesiumsilikat, Calciumsilikat, Natriumaluminiumsilikat oder Calciummagnesiumsilikat eingesetzt wird.

8. Vulkanisierbare Zusammensetzungen nach einem der Ansprüche 1 bis 7, wobei als Komponente (c) Natriumaluminiumsilikat mit einem pH-Wert in Wasser (5 Gew.-% in Wasser) gemessen nach DIN ISO 787/9 von 11,3±0,7, einem Gehalt an flüchtigen Bestandteilen gemessen nach DIN ISO 787/2 von 5,5±1,5 und einer Oberfläche (BET) gemessen nach ISO 9277 von 65±15, eingesetzt wird.

9. Vulkanisierbare Zusammensetzung nach einem der Ansprüche 1 bis 8, wobei die Komponente (b) zur Komponente (c) in einem Gewichtsverhältnis von 20:1 bis 1:1, bevorzugt 10:1 bis 2:1 und besonders bevorzugt 5:1 bis 3:1 vorliegt.

10. Vulkanisierbare Zusammensetzung nach einem der Ansprüche 1 bis 9, wobei die Komponente (d) in einer Menge von 1 bis 20 Gew.-Teilen, bevorzugt 2 bis 10 Gew.-Teilen, bezogen auf 100 Gew.-Teile des hydrierten Nitrilkautschuks (a), eingesetzt wird.

11. Vulkanisierbare Zusammensetzungen nach einem der Ansprüche 1 bis 10, wobei als Komponente (d) Dicumylperoxid, tert-Butylcumylperoxid, Bis(tert-butylperoxyisopropyl)benzol, Di-tert-butylperoxid, 2,5-Dimethylhexan-2,5-dihydroperoxid, 2,5-Dimethylhexin-3,2,5-di-hydroperoxid, Dibenzoylperoxid, Bis-(2,4-dichlorobenzoyl)peroxid, tert-Butylperbenzoat, 4,4-Di(tert-butylperoxy)valeriansäurebutylester oder 1,1-Bis(tert-butylperoxy)-3,3,5-trimethyl-cyclohexan eingesetzt wird.

12. Vulkanisierbare Zusammensetzungen nach einem der Ansprüche 1 bis 11, enthaltend
(a) 100 Gew.-Teile mindestens eines hydrierten Nitrilkautschuks,
(b) 50 bis 100 Gew.-Teile, bevorzugt 60 bis 90 Gew.-Teile mindestens eines nichtverstärkenden mineralischen Füllstoffs,
(c) 5 bis 50 Gew.-Teile, bevorzugt 10 bis 30 Gew.-Teile mindestens eines basischen Silikats mit einem pH Wert in Wasser (5 Gew.-% in Wasser) gemessen nach DIN ISO 787/9 größer 7 und
(d) 1 bis 20 Gew.-Teile, bevorzugt 2 bis 10 Gew.-Teile mindestens einer Peroxidverbindung.

13. Vulkanisierbare Zusammensetzungen nach einem der Ansprüche 1 bis 12, enthaltend
(a) 100 Gew.-Teile mindestens eines hydrierten Nitrilkautschuks,
(b) 50 bis 100 Gew.-Teile, bevorzugt 60 bis 90 Gew.-Teile kalziniertes Kaolin enthaltend 55 Gew.-% SiO₂ und 41 Gew.-% Al₂O₃ mit einem pH Wert in Wasser (5 Gew.-% in Wasser) gemessen nach DIN ISO 787/9 von 6,5±0,5 und einer Oberfläche (BET) gemessen nach ISO 9277 von 8,5 m²/g,
(c) 5 bis 50 Gew.-Teile, bevorzugt 10 bis 30 Gew.-Teile Natriumaluminiumsilikat mit einem pH-Wert in Wasser (5 Gew.-% in Wasser) gemessen nach DIN ISO 787/9 von 11,3±0,7, einem Gehalt an flüchtigen Bestandteilen gemessen nach DIN ISO 787/2 von 5,5±1,5 und einer Oberfläche (BET) gemessen nach ISO 9277 von 65±15,
(d) 1 bis 20 Gew.-Teile, bevorzugt 2 bis 10 Gew.-Teile mindestens einer Peroxidverbindung, bevorzugt Dicumylperoxid, tert-Butylcumylperoxid, Bis(tert-butylperoxyisopropyl)benzol, Di-tert-butylperoxid, 2,5-Dimethylhexan-2,5-dihydroperoxid, 2,5-Dimethylhexin-3,2,5-di-hydroperoxid oder Dibenzoylperoxid.

14. **Vulkanisate**, erhältlich durch Vulkanisation der vulkanisierbaren Zusammensetzung nach einem oder mehreren der Ansprüche 1 bis 13.

15. **Verwendung der Vulkanisate** nach Anspruch 14 als Dichtungen, Riemen, Walzenbeläge, Schläuche und Kabel.
